# EUROPÄISCHE PATENTSCHRIFT

(11) **EP 0 622 884 B1**
(45) Veröffentlichungstag und Bekanntmachung des Hinweises auf die Patenterteilung: **17.06.1998**
(21) Anmeldenummer: 94105858.8
(22) Anmeldetag: 13.04.1994
(51) Int. Cl.: H02J 13/00, H04L 12/40

(54) **Einrichtung zur Datenübertragung über ein Installationsbussystem**
Data communication equipment with an installation bus system
Installation de transmission des données via un système de bus à l'installation

(30) Priorität: 19.04.1993 DE 4312616
(43) Veröffentlichungstag der Anmeldung: 02.11.1994
(73) Patentinhaber: ABB PATENT GmbH, 68309 Mannheim (DE)
(72) Erfinder: Kahl, Walter, D-69190 Walldorf (DE); Heilig, Peter, D-69121 Heidelberg (DE); Eckel, Dietmar, D-74931 Lobbach (DE)
(74) Vertreter: Rupprecht, Klaus, Dipl.-Ing.

(56) Entgegenhaltungen:
- DE-A- 4 019 465
- DE-A- 4 104 230

## Beschreibung

Die Erfindung bezieht sich auf ein Installationsbussystem, das beispielsweise in der Druckschrift "Busch-Installationsbus EIB, die intelligente Lösung für die Gebäudesystemtechnik", Busch-Jaeger Elektro GmbH, Bestell-Nr. BJE 1083/12.92/0502 beschrieben ist. An ein solches Installationsbussystem sind Schaltsensoren und Dimmsensoren anschließbar, mit denen Leuchten und andere Verbraucher steuerbar sind.

Es hat sich gezeigt, daß für manche Anwendungen ein Bedarf besteht, neben Schaltbefehlen auch Daten oder Adressen über den Installationsbus zu übertragen. Eine Verwendung des Installationsbussystems zur Übertragung von physikalischen Meßgrößen in Telegrammstruktur ist in der genannten Druckschrift auch bereits auf Seite 4 erwähnt, allerdings ohne Angabe einer Realisierungsmöglichkeit.

Der Erfindung liegt daher die Aufgabe zugrunde, eine kostengünstige Einrichtung zur Datenübertragung über ein Installationsbussystem anzugeben.

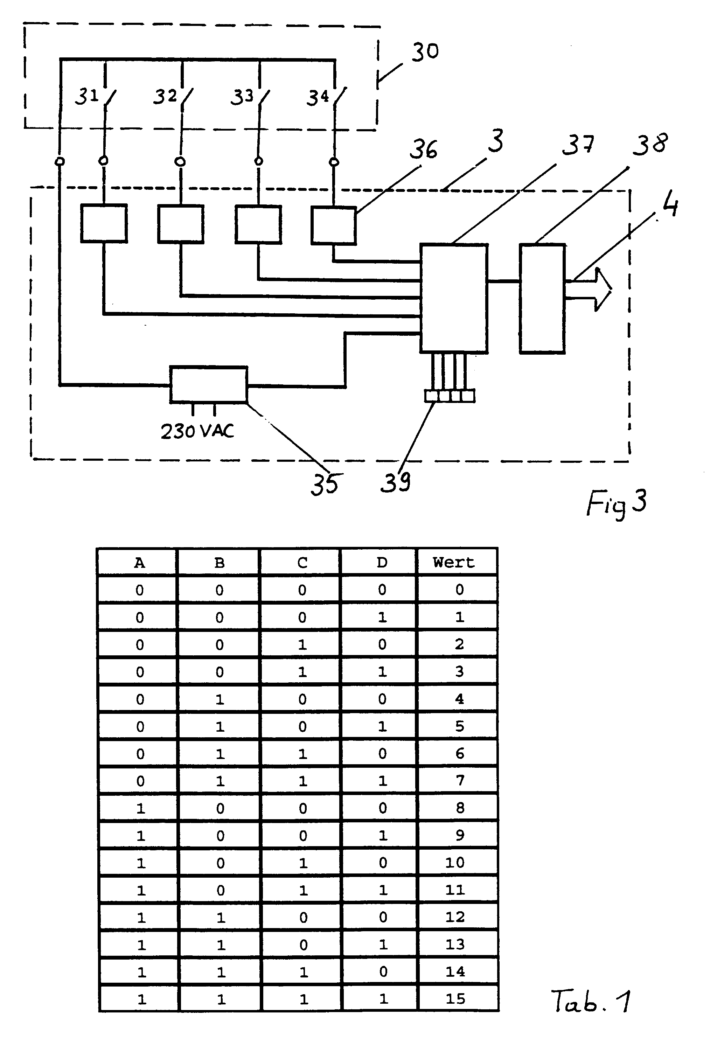

Ausgehend von einer in Fig. 3 dargestellten bekannten Mehrfach-Binär-Eingabeeinrichtung wird die Aufgabe durch die im kennzeichnenden Teil des Anspruchs 1 definierten Merkmale gelöst.

Die mit der Erfindung vorgeschlagene Verwendung eines im Installationsbussystem bereits für andere Zwecke vorhandenen Standardgerätes als Schnittstelleneinrichtung zur Eingabe von Daten in das Installationsbussystem hat den Vorteil, daß keine spezielle Daten-Schnittstelleneinrichtung entwickelt werden muß. Die Entwicklung eines neuen, zum Anschluß an ein standardisiertes Bussystem geeigneten Gerätes ist aufwendig. Im Fall des Europäischen-lnstallationsbus(EIB)-Systems ist eine Zulassung durch die EIBA (European Installationbus Association sc) erforderlich. Es muß ein Nachweis geführt werden, daß alle Anforderungen gemäß EIB-Entwicklerhandbuch erfüllt werden. Eine nähere Erläuterung der Erfindung erfolgt nachstehend anhand von Ausführungsbeispielen, die in der Zeichnung dargestellt sind.

Es zeigen:
- Figur 1: eine erste erfindungsgemäße Anordnung mit einem an ein Installationsbussystem angeschlossenem Maximumwächter,
- Figur 2: eine zweite erfindungsgemäße Anordnung mit einer Meßwerteingabe in ein Installationsbussystem,
- Figur 3: ein 4-fach Binär-Eingabegerät, das als Standardeingabegerät nach dem Stand der Technik in Verbindung mit Schaltsensoren verwendet wird.

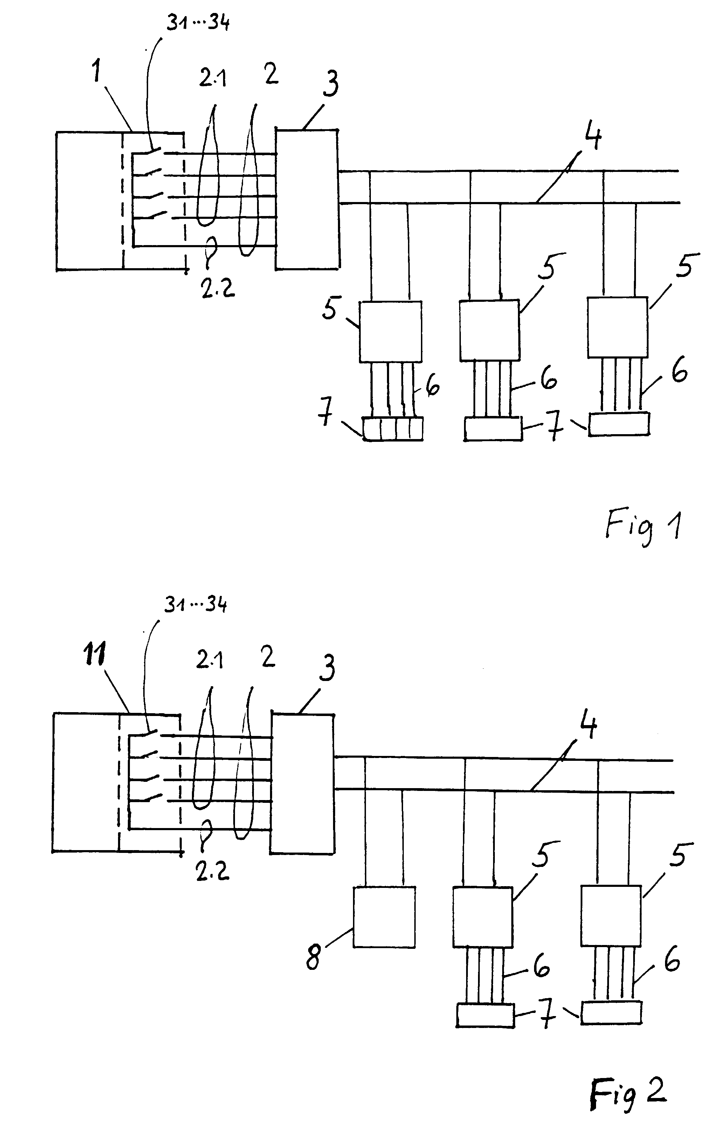

Figur 1 zeigt Busleitungen 4 eines Installationsbussystems. Ein solches Installationsbussystem, auf das sich die Erfindung hauptsächlich bezieht, ist das EIB-Bussystem, das in einem Entwicklerhandbuch, dem handbook EIB 200, Ausgabe 11/92 der EIBA, Brüssel, beschrieben ist. Zu diesem Installationsbussystem wurden bereits mehrere Geräte von unterschiedlichen Herstellern entwickelt. Ein solches EIB-Gerät ist ein 4-fach Binär-Eingabegerät 3, das zur Erfassung des Schaltzustandes von vier Schaltsensoren entwickelt wurde.

Figur 3 zeigt das 4-fach Binär-Eingabegerät 3 in der bekannten Anwendung zur Erfassung des Schaltzustandes eines Schaltsensors 30, der vier potentialfreie Schaltkontakte 31 bis 34 enthält. Im 4-fach Binär-Eingabegerät wird mit Hilfe einer Spannungsversorgungseinrichtung 35 eine Abfragespannung erzeugt, die den Schaltkontakten 31 bis 34 zugeleitet ist. Der zweite Kontaktanschluß der Kontakte 31 bis 34 ist jeweils über Eingangsglieder 36, z.B. Optokoppler mit einer Steuer- und Auswerteeinrichtung 37 verbunden. Die Steuerund Auswerteeinrichtung 37 steht mit einer Busankoppeleinrichtung 38 in Verbindung. Die Busankoppeleinrichtung 38 enthält einen programmierbaren Prozessor, der von der Steuer- und Auswerteeinrichtung 37 mitbenutzt wird. Der in der Auswerteeinrichtung 37 erfaßte Schaltzustand der Kontakte 31 bis 34 wird als Schaltbefehl über die Busankoppeleinrichtung 38 auf die Busleitungen 4 gegeben. Der Schaltzustand der Kontakte 31 bis 34 wird außerdem am 4-fach Binär-Eingabegerät 3 mittels lichtemittierenden Dioden 39 zur Anzeige gebracht. Das zugrundegelegte Installationsbussystem arbeitet mit einem Zweidrahtbus; deshalb sind die Busleitungen 4 in den Zeichnungen mit zwei Leitungen dargestellt.

Das vorstehend anhand von Figur 3 beschriebene 4-fach Binär-Eingabegerät 3 ist in der in Figur 1 dargestellten Anordnung als Interface zwischen den Busleitungen 4 des Installationsbussystems und einem Maximumwächter 1 eingesetzt. Der Maximumwächter 1 hat beispielsweise vierzehn Abschaltstufen, die ein- oder ausgeschaltet sein können. Der Maximumwächter 1 ist über Verbindungsleitungen 2 mit dem 4-fach Binär-Eingabegerät 3 verbunden. Die Verbindungsleitungen 2 umfassen vier Datenleitungen 2.1, die mit den Eingabegliedern 36 verbunden sind, und eine Zuleitung 2.2 für die Abfragespannung. Die Verbindungsleitungen 2 bilden einen 4 Bit breiten Daten-/Adressenbus, der binär codiert ist, wie in Tabelle 1 gezeigt ist. Die binäre Codierung ermöglicht die Unterscheidung von 16 Werten. Die Tabelle 1 zeigt eine Zuordnung der 16 Werte zu Kombinationen der 4 Bit A bis D. Eine mögliche Verwendung der 16 Werte besteht z.B. darin, dem Wert 0 die Bedeutung "Abschaltstufe x ausschalten" zuzuordnen und dem Wert 15 die Bedeutung "Abschaltstufe x einschalten" zuzuordnen. Es steht dabei x für eine der Nummern der Abschaltstufen 1 bis 14, die durch die Werte 1 bis 14 darstellbar sind. Durch alternierendes Einlesen einer Nummer einer Abschaltstufe, also eines der Werte 1 bis 14 und des zugehörigen Schaltbefehls, also Wert 0 oder 15, können somit Schaltbefehle des Maximumwächters 1 in der Auswerteeinrichtung 37 des 4-fach Binär-Eingabegerätes 3 erfaßt und über die Busleitungen 4 zu Ausgabeterminals 5 geleitet werden. Im Ausführungsbeispiel sind die Ausgabeterminals 5 für vier Schaltstufen ausgerüstet. An die Terminals 5 sind mehrere Einzellasten oder eine mehrstufig schaltbare Last 7 angeschlossen. Mit Hilfe einer Gruppenadressierung sind mehrere Terminals 5 zugleich ansteuerbar.

Ein zweites Ausführungsbeispiel ist in Figur 2 dargestellt. In dieser Anordnung liefert eine Meßeinrichtung 11 einen digitalisierten und mit 4 Bit codierten Meßwert an das 4-fach Binär-Eingabegerät 3. Das 4-fach Binär-Eingabegerät 3 ist hardwaremäßig identisch mit dem in den Figuren 1 und 3 dargestellten Gerät 3. Es ist lediglich eine modifizierte Software vorhanden, die die erfaßten Kontaktstellungen in der Meßwerteinrichtung 11 als Meßwert interpretiert und gegebenenfalls mit einer Adresse ergänzt an einen Meßwert-controller 8 in Telegrammform weiterleitet. Der Meßwertcontroller 8 wertet die erfaßten Meßwerte anhand von gespeicherten Informationen aus und steuert in Abhängigkeit vom Ergebnis der Auswertung Lasten 7 durch Sendung von Steuertelegrammen an die Ausgabeterminals 5.

In einer vereinfachten Version kann der Meßwertcontroller 8 auch entfallen. In diesem Fall wird die Software des 4-fach Binär-Eingabegerätes 3 entsprechend modifiziert, damit dort eine Auswertung der Meßwerte erfolgen kann.

Es versteht sich, daß anstelle eines 4-fach Binär-Eingabegerätes auch ein anderes Mehrfach-Binär-Eingabegerät, z.B. ein 6-fach oder 8-fach Eingabegerät sinngemäß verwendet werden kann, sobald ein solches Gerät zur Verfügung steht. Damit wären die Datenerfassungsmöglichkeiten noch verbessert.

### Bezugszeichenliste

- 1: Maximumwächter
- 2: Verbindungsleitungen
- 2.1: Datenleitungen
- 2.2: Zuleitung für Abfragespannung
- 3: 4-fach Binär-Eingabegerät
- 4: Busleitungen
- 5: Ausgabeterminal mit vier Schaltstufen
- 6: Anschlußleitung für Last
- 7: Last
- 8: Meßwert-Controller
- 11: Meßeinrichtung
- 30: Schaltsensor
- 31 bis 34: Schaltkontakt
- 35: Spannungsversorgungseinrichtung
- 36: Eingangsglied
- 37: Auswerteeinrichtung
- 38: Busankoppeleinrichtung
- 39: lichtemittierende Diode

## Patentansprüche

1. Einrichtung zur Erfassung und Übertragung von Daten und/oder Adressen über einen Installationsbus,
wobei ein an sich bekanntes standardisiertes n-fach-Binär-Eingabegerät (3) zur Daten- und/oder Adresseingabe dient,
wobei Schaltzustände von n potentialfreien Kontakten (31-34) vom Eingabegerät (3) abgefragt und als Daten und/oder Adressen interpretiert werden
dadurch gekennzeichnet, daß
eine Datenquelle (11) vorgesehen ist, die Daten und/oder Adressen mit einer Anzahl m möglicher unterschiedlicher Werte mit an das Eingabegerät (3) angepaßter Bit-Zahl codiert und in Form von Schaltzuständen von n potentialfreien Kontakten an das Eingabegerät bereitstellt,
wobei die Bedingung m>n>=4 gilt, und
das Eingabegerät (3) eine modifizierte Software aufweist, die die erfaßten Kontaktstellungen als binär codierte Daten und/oder Adressen interpretiert.

2. Einrichtung nach Anspruch 1, dadurch gekennzeichnet, daß das Binär-Eingabegerät (3) eine Auswerteeinrichtung (37) und eine Busankoppeleinrichtung (38) mit einem programmierbaren Prozessor enthält, und daß diese Gerätekomponenten (37,38) dafür eingerichtet sind, die Erfassung der Daten oder Adressen durchzuführen und in Abhängigkeit von solchen erfaßten Informationen an Busleitungen (4) des Bussystems angeschlossene Terminals (5) zu steuern.

3. Einrichtung nach Anspruch 1, dadurch gekennzeichnet, daß an Busleitungen (4) des Installationsbussystems außer wenigstens einem Binär-Eingabegerät (3) und Terminals (5) ein Meßwertcontroller (8) angeschlossen ist, der eingerichtet ist zur Auswertung von Meßwerten, die vom Binär-Eingabegerät (3) erfaßt und über die Busleitungen (4) übertragen sind und der eingerichtet ist zur Steuerung der Terminals (5) in Abhängigkeit vom Ergebnis der Auswertung.

## Claims

1. Device for detecting and transmitting data and/or addresses via an installation bus, a standardized n-fold binary input device (3) known per se serving for data input and/or address input, switching states of n potential-free contacts (31-34) being interrogated by the input device (3) and interpreted as data and/or addresses, characterized in that a data source (11) is provided which encodes data and/or addresses with a number m of possible different values with a bit number matched to the input device (3) and provides them to the input device in the form of switching states of n potential-free contacts, the condition m>n>=4 being valid, and the input device (3) having a modified software which interprets the detected contact points as binary coded data and/or addresses.

2. Device according to Claim 1, characterized in that the binary input device (3) contains an evaluation device (37) and a bus coupling device (38) with a programmable processor, and in that these device components (37, 38) are set up for detecting the data or addresses and for controlling terminals (5), connected to bus lines (4) of the bus system, as a function of such detected information.

3. Device according to Claim 1, characterized in that apart from at least one binary input device (3) and terminals (5), there is connected to bus lines (4) of the installation bus system a measured value controller (8) which is set up for evaluating measured values which are detected by the binary input device (3) and are transmitted via the bus lines (4), and which is set up for controlling the terminals (5) as a function of the result of the evaluation.

## Revendications

1. Dispositif pour la saisie et la transmission de données et/ou d'adresses par un bus d'installation,
un système d'introduction (3) binaire à n voies, standardisé, connu en soi, servant à l'introduction des données et/ou des adresses,
l'état de commutation de n contacts (31-34) hors potentiel étant interrogé par l'appareil d'introduction (3) et interprété en tant que données et/ou adresses,
**caractérisé** par le fait que
il est prévu une source de données (11) qui code les données et/ou adresses avec un nombre m de valeurs différentes possibles avec un nombre de bits adapté à l'appareil d'introduction (3) et les fournit sous forme d'états de commutation de n contacts hors potentiel à l'appareil d'introduction,
les conditions étant telles que m > n > = 4, et
l'appareil d'introduction (3) présente un logiciel modifié qui interprète les positions de contact détectées en tant que données et/ou adresses à codage binaire.

2. Dispositif suivant la revendication 1, **caractérisé** par le fait que l'appareil d'introduction (3) binaire comprend un dispositif d'évaluation (37) et un dispositif de couplage de bus (38) avec un processeur programmable, et que ces composants (37, 38) de l'appareil sont conçus pour exécuter la saisie des données ou adresses et commander, en fonction de telles informations saisies, des terminaux (5) reliés à des lignes de bus (4) du système de bus.

3. Dispositif suivant la revendication 1, **caractérisé** par le fait qu'aux lignes de bus (4) du système de bus d'installation sont reliés, outre au moins un appareil d'introduction (3) binaire et les terminaux (5), un contrôleur de valeurs de mesure (8) qui est conçu pour évaluer des valeurs de mesure saisies par l'appareil d'introduction (3) binaire et transmises par les lignes de bus (4) et qui est conçu pour la commande des terminaux (5) en fonction du résultat de l'évaluation.
